# EUROPÄISCHE PATENTSCHRIFT

(11) **EP 1 419 350 B1**
(45) Veröffentlichungstag und Bekanntmachung des Hinweises auf die Patenterteilung: **17.05.2006**
(21) Anmeldenummer: 02794497.4
(22) Anmeldetag: 01.07.2002
(51) Int. Cl.: F24F 5/00, F03D 11/00

(54) **WINDENERGIEANLAGE**
WIND ENERGY INSTALLATION
INSTALLATION D'ENERGIE EOLIENNE

(30) Priorität: 10.08.2001 DE 10139556
(43) Veröffentlichungstag der Anmeldung: 19.05.2004
(60) Teilanmeldung: 05110457.8
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2002/007225
(87) Internationale Veröffentlichungsnummer: WO 2003/014629

(56) Entgegenhaltungen:
- EP-A- 0 078 932
- WO-A-01/21956
- WO-A-99/11927
- DE-A- 19 947 915
- US-A- 3 956 902
- US-A- 5 890 371
- PATENT ABSTRACTS OF JAPAN vol. 1996, no. 02, 29. Februar 1996 (1996-02-29) -& JP 07 280293 A (AZUMA KOGYO KK), 27. Oktober 1995 (1995-10-27)
- PATENT ABSTRACTS OF JAPAN vol. 1998, no. 11, 30. September 1998 (1998-09-30) -& JP 10 165746 A (NISSIN ELECTRIC CO LTD), 23. Juni 1998 (1998-06-23)
- PATENT ABSTRACTS OF JAPAN vol. 1995, no. 08, 29. September 1995 (1995-09-29) -& JP 07 133940 A (MITSUBISHI HEAVY IND LTD), 23. Mai 1995 (1995-05-23)
- PATENT ABSTRACTS OF JAPAN vol. 1998, no. 10, 31. August 1998 (1998-08-31) -& JP 10 118442 A (TEIKOKU PISTON RING CO LTD), 12. Mai 1998 (1998-05-12)

## Beschreibung

Die vorliegende Erfindung betrifft eine Windenergieanlage, insbesondere eine Windenergieanlage mit einer Vorrichtung zum Entfeuchteri-eines-gasförmigen-Mediums in einem im Wesentlichen geschlossenen Raum innerhalb der Windenergieanlage.

Eine solche Vorrichtung auf chemischer Basis ist seit langem bekannt. Bei dieser bekannten Vorrichtung wird der Raumluft auf chemischem Weg Feuchtigkeit entzogen und diese wird in einem Auffangbehälter gesammelt. Bei dieser bekannten Vorrichtung ist es jedoch nachteilig, dass die Chemikalie in bestimmten zeitlichen Abständen ersetzt werden muss, um die Funktionsfähigkeit zu erhalten. Dies erfordert bei einer Vielzahl von Vorrichtungen, die zentral überwacht und gewartet werden sollen, zusätzlichen personellen und logistischen Aufwand.

Weiterhin sind Vorrichtungen der eingangs genannten Art bekannt, bei denen ein umgrenzter Raum nach dem Wirkprinzip eines Kühlschrankes über eine KompressorNerdampfer-Einheit mittels eines besonders hierfür vorgesehenen Kühlmittels abgekühlt wird, um so der in diesem Raum enthaltenen Luft Feuchtigkeit zu entziehen.

Bei diesen Vorrichtungen ist jedoch der Aufbau aufwändig und zusätzlich es erforderlich, dass die Kühlflüssigkeit die bei der Entsorgung getrennt gesammelt werden muss.

Aufgabe der vorliegenden Erfindung ist es daher, eine Windenergieanlage weiterzubilden, insbesondere eine Windenergieanlage derart auszubilden, dass Feuchtigkeitsprobleme innerhalb der Windenergieanlage auf einfache Art und Weise beseitigt werden können.

Diese Aufgabe wird eifültt durch eine Windenergieanlage mit den Merkmalen nach Anspruch 1. Vorteilhafte Weiterbildungen sind in den Unteransprüchen beschrieben. Bei der erfindungsgemäßen Windenergieanlage erfüllt ein erstes, flächiges Element und eine Kühlvorrichtung zum Kühlen des Elements auf eine Temperatur unterhalb der Umgebungstemperatur (Raumtemperatur) die Aufgabe. Bei dieser Umgebungstemperatur kondensiert ein Teil der in der Luft enthaltenen Feuchtigkeit an der Oberfläche des ersten Elements. Diese Feuchtigkeit wird auf diese Weise der Umgebungsluft entzogen und kann abgeleitet werden.

Um einen wartungsfreien Dauerbetrieb zu ermöglichen, ist die Kühlvorrichtung bevorzugt ein Peltier-Element bzw. eine Gruppe von Peltier-Elementen, die dem ersten Element Wärme entziehen und dieses dadurch abkühlt. Diese dem ersten Element entzogene Wärme wird über ein zweites Element wieder an die Umgebung abgegeben.

Um eine besonders gute Wirkung zu erzielen, kann das zweite Element mit einer den zu entfeuchtenden Raum begrenzenden Wand verbunden sein oder sogar durch diese gebildet werden.

Die Ableitung des Kondenswassers kann durch einen Kanal und einen Wanddurchbruch ins Freie erfolgen. Dabei kann dieser Wanddurchbruch bevorzugt in Bodennähe vorgesehen sein, um Spuren von Tropfwasser an Außenwänden zu vermeiden.

Um bei einer Verstopfung des Kanals zum Ableiten des Kondenswassers ein unkontrolliertes Herabtropfen des Kondenswassers innerhalb des Raumes zu vermeiden, kann ein Behälter vorgesehen sein, der diese Tropfen auffängt. Somit kann im Rahmen einer Inspektion oder nach einer Signalisierung eines entsprechend in dem Behälter angeordneten Sensors dieser Behälter entleert werden. Gleichzeitig kann der Verschluss des Kanals beseitigt werden, so dass das Kondenswasser wieder selbsttätig aus dem Raum entfernt wird.

In einer besonders bevorzugten Weiterbildung der Erfindung ist ein erster Temperatursensor zum Erfassen der Temperatur des ersten Elements und ein zweiter Temperatursensor zum Erfassen der Umgebungstemperatur vorgesehen. Mittels dieser Sensoren und einer nachgeordneten Steuerungsvorrichtung kann die erfindungsgemäße Vorrichtung derart gesteuert werden, dass das erste Element stets eine vorgebbare Temperaturdifferenz gegenüber der Umgebungstemperatur auf weist. Dadurch kann eine konstante Entfeuchtungs-Leistung erreicht werden.

Vorteilhafte Ausführungsformen sind in den Unteransprüchen angegeben.

Raumluftentfeuchter sind bereits bekannt aus DE-U-92 10 970.5, DE 44 23 851, DE-PS-1189250, EP 0 758 730 A2 sowie US-5,071,027. Der Einsatz solcher Raumluftentfeuchter innerhalb von Windenergieanlagen ist bislang noch nicht vorgeschlagen worden.

Aus WO 01/21956 ist eine Windenergieanlage bekannt mit darin enthaltenen Mittein zum Trocknen der Luft innerhalb der Windenergieanlage.

im Folgenden wird eine Ausführungsform der Erfindung anhand der Zeichnungen näher erläutert. Dabei zeigen:
- Figur 1: eine perspektivische Darstellung einer erfindungsgemäßen Vorrichtung:
- Figur 2: eine weitere Darstellung der erfindungsgemäßen Vorrichtung; und
- Figur 3: eine Anordnung einer erfindungsgemäßen Vorrichtung im Turm einer Windenergieanlage;
- Figur 4: eine perspektivische Darstellung einer erfindungsgemäßen Vorrichtung.

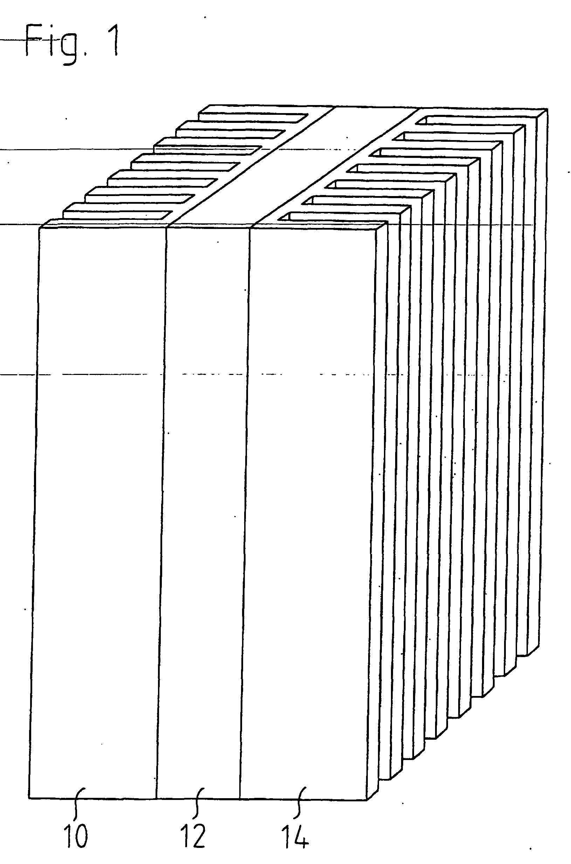

In Figur 1 ist eine erfindungsgemäße Vorrichtung in einer Seitenansicht dargestellt. Zwischen einem ersten Element 10 und einem zweiten Element 14 befindet sich eine Kühlvorrichtung 12. Diese Kühlvorrichtung 12 ist ein mit elektrischer Energie betriebenes Peltier-Element bzw. eine Gruppe von Peltier-Elementeri. Sie bewirkt einen Wärmetransport von einer lateraten Grenzfläche zu der anderen - in diesem Fall wird die Wärme von dem ersten Element 10 zu dem zweiten Element 14 transportiert.

Wird die Kühlvorrichtung 12 mit einem geeigneten, nach Betrag und Richtung vorgegebenen Strom beaufschlagt, wird dem ersten Element 10 Wärme entzogen und zu dem zweiten Element 14 transportiert, wo sie wiederum an die Umgebung abgegeben wird. Das erste Element 10 und das zweite Element 14 sind bevorzugt als Kühlkörper ausgeführt, also flächige Aluminium-Elemente mit darauf verlaufenden Kühlrippen zur Vergrößerung der wirksamen Oberfläche.

Durch den Entzug von Wärme kühlt sich das erste Element 10 unter die Umgebungstemperatur ab und die in der Umgebungsluft enthaltene Feuchtigkeit kondensiert an diesem Element 10.

Da die oberflächenvergrößemden Kühlrippen des ersten Elements 10 vertikal verlaufen, kann das Kondenswasser leicht durch Schwerkraftwirkung nach unten ablaufen und kann dann entsprechend ausgesammelt und im Bedarfsfall mittels Leitungen abgeführt werden.

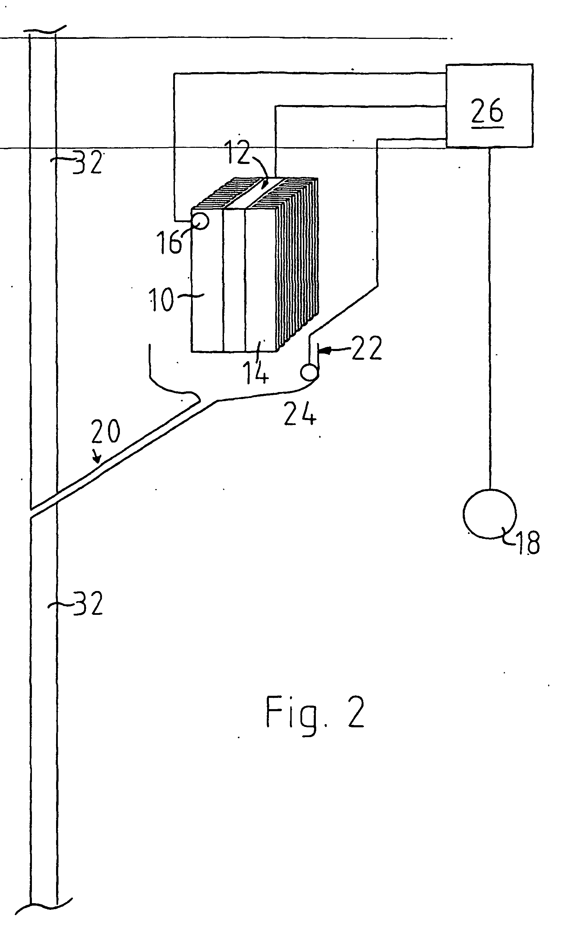

Aus der in Figur 2 gezeigten Seitenansicht ist erkennbar, dass das entlang der Kühlrippen des ersten Elements 10 nach unten ablaufende Kondenswasser in einen Kanal 20 gelangt, der durch eine Wand 32 hindurch ins Freie geführt ist, so dass das Kondenswasser problemlos ins Freie ablaufen kann.

Sollte es zu einer Verstopfung dieses Kanals 20 kommen, ist zusätzlich ein Auffangraum 22 vorgesehen, der das Kondenswasser speichern kann, so dass es nicht unkontrolliert in Bereiche unterhalb der Vorrichtung tropft. In dem Auffangraum 22 ist ein Flüssigkeitssensor 24 vorgesehen, der ein Ansteigen des Flüssigkeitsspiegels erkennen und ein entsprechendes Signal auslösen kann, das z.B. verwendet werden kann, um Wartungspersonal zu veranlassen, den Verschluss des Kanals 20 zu beseitigen und den Auffangraum zu leeren.

Eine Steuerungsvorrichtung 26 ist vorgesehen, um über einen ersten Temperatursensor 16 die Temperatur des ersten Elements 10 zu erfassen. Über einen zweiten Temperatursensor 18 wird die Umgebungstemperatur erfasst Die Steuerungsvorrichtung 26 kann dann aus der Temperaturdifferenz und vorgegebenen Sollwerten die erforderliche Steuerung für die Kühlvorrichtung 12 ableiten. Natürlich kann diese Steuerung auch den Flüssigkeitssensor 24 überwachen und die entsprechenden Signale erzeugen und ausgeben.

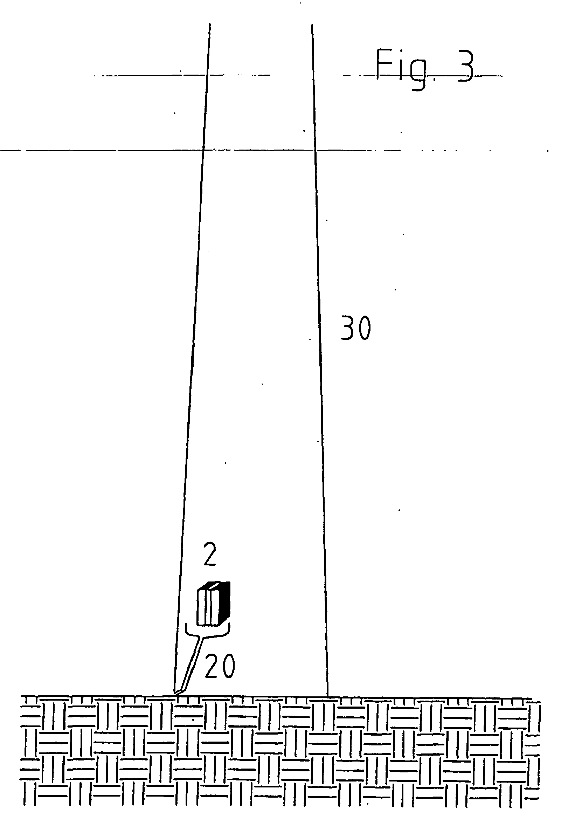

Figur 3 zeigt eine Teilansicht eines Turmes 30 einer Windenergieanlage. Die erfindungsgemäße Vorrichtung, die in dieser Figur in ihrer Gesamtheit mit dem Bezugszeichen 2 bezeichnet ist, sei etwa auf der Hälfte der Höhe des Turmes 30 angeordnet. Der Kanal 20 zum Ableiten des Kondenswassers ist in dieser Figur innerhalb des Turms 30 bis in Bodennähe verlegt und tritt erst dort durch die Wand 32 des Turmes 30-nach-außen: Dadurch werden Wasserspuren an der Außenseite der Wand 32 zuverlässig vermieden.

Der bevorzugte Einbauort des erfindungsgemäßen Entfeuchters liegt im Bereich des Turmfußes, der Einbau an anderen Stellen der Windenergieanlage ist aber auch möglich. Der Bereich des Turmfußes hat den Vorteil, dass die regelmäßig im Turmfuß angeordneten Stromrichter von bereits entfeuchteter Luft durchströmt werden.

Eine vorteilhafte weitere Möglichkeit zum Ableiten des Kondenswassers aus dem Turm ergibt sich im Bereich der Zugangstür. Diese wird ohnehin als separates Bauelement in die untere Sektion des Turmes eingebaut Auf diese Weise lässt sich eine bei einem Durchbruch der Turmwand unerlässliche Konstruktionsänderung vermeiden.

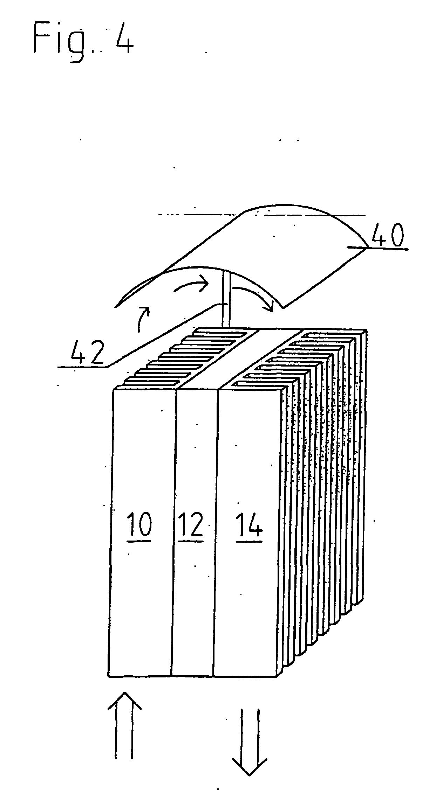

Figur 4 zeigt eine modifizierte Darstellung von Figur 1. Der Unterschied zu Figur 1 besteht im Wesentlichen in einem Leitblech 40,-das oberhalb der Kühlkörper (erstes und zweites Element) 10, 14 angeordnet ist und die durch ein Gebläse am ersten (kühlenden) Element entlanggeführte, abgekühlte Luft umlenkt. Diese abgekühlte Luft wird durch das Leitblech 40 auf das zweite (warme) Element 14 umgelenkt und kühlt - dieses. Dabei wird das Leitblech 40 durch Stützen 42 in einer vorgegebenen Position gehalten. Der Übersichtlichkeit wegen ist nur eine Stütze 42 dargestellt

Demnach wird der vorbeiströmenden Luft am ersten Element 10 Wärme entzogen, diese Wärme wird durch die Kühlvorrichtung (Peltier-Element) 12 zu dem zweiten Element 14 transportiert. Das Leitblech 40 lenkt die abgekühlte Luft zu dem zweiten Element 14 um und dort nimmt die Luft (die ihr vorher entzogene) Wärme wieder auf. Auf diese Weise kann die zur Kühlung des zweiten Elements 14 erforderliche Gebläseleistung und damit der Energieverbrauch der Vorrichtung verringert werden.

Wie beschrieben, ist die Funktion der Kühlvorrichtung, wie beispielsweise des Peltier Elements, also vordergründig nicht die Kühlung der Luft innerhalb der Windenergieanlage, sondern allein die Entfeuchtung des Inneren der Anlage, weshalb auch die gekühlte Luft von einer Seite der Kühlvorrichtung zur anderen Seite umgelenkt wird und dann gleich wieder erwärmt wird und die Temperatur in der Anlage somit kaum beeinflusst wird.

## Patentansprüche

1. Windenergienanlage, bestehend aus einem Turm und einem an der Turmspitze angeordneten Maschinenhaus, mit einem Generator, gegebenenfalls einem Transformation und einem mit dem Transformator gekoppelten Stromrichter, wobei in der Nähe des Generators oder des Transformators und/oder des Stromrichters und/oder im Bereich eines Turmfußes der Windenergieanlage eine Einrichtung zum Entfeuchten der Luft vorgesehen ist, wobei die Einrichtung zum Entfeuchten ein erstes flächiges Element (10) und eine hiermit gekoppelte Kühlvorrichtung (12) zum Kühlen des ersten Elementes (10) auf eine Temperatur unterhalb der Temperatur in der Nähe des Generators oder Transformators und/oder des Stromrichters und/oder im Bereich des Turmfußes aufweist.

2. Windenergieantage nach Anspruch 1,
**dadurch gekennzeichnet, dass** die Einrichtung zum Entfeuchten **gekennzeichnet ist durch** ein erstes flächiges Element (10) und eine hiermit gekoppelte Kühlvorrichtung (12) zum Kühlen des ersten Elements (10) auf eine Temperatur unterhalb der Raum-temperatur, wobei die Einrichtung zum Entfeuchten der Luft im Wesentlichen im Inneren der Windenergieanlage angeordnet ist.

3. Windenergieanlage nach Anspruch 1 oder 2,
**dadurch gekennzeichnet, dass** das zweite Element (14) mit einer Wand (32) verbunden oder durch die Wand (32) gebildet ist.

4. Windenergieanlage nach einem der vorhergehenden Ansprüche,
**dadurch gekennzeichnet, dass** die Kühlvorrichtung (12) zwischen dem ersten Element (10) und dem zweiten Element (14) angeordnet ist und diese bevorzugt verbindet.

5. Windenergieanlage nach einem der vorhergehenden Ansprüche,
**gekennzeichnet durch** eine den Peltier-Effekt ausnutzende Kühlvorrichtung.

6. Windenergieanlage nach einem der vorhergehenden Ansprüche,
**dadurch gekennzeichnet, dass** eine Auffangeinheit und/oder ein Kanal zum Abführen der dem gasförmigen Medium entzogenen Flüssigkeit vorgesehen ist.

7. Windenergieanlage nach Anspruch 6,
**dadurch gekennzeichnet, dass** die mit dem ersten Flächenelement (10) aufgefangene Flüssigkeit über eine entsprechende Einrichtung, bevorzugt den Kanal (20), aus dem Raum geleitet wird.

8. Windenergieanlage nach Anspruch 7,
**dadurch gekennzeichnet, dass** der Kanal im bodennahen Bereich des Raumes, bei einer Windenergieanlage im Fußbereich des Turmes, angeordnet ist.

9. Windenergieanlage nach einem der vorhergehenden Ansprüche,
**dadurch gekennzeichnet, dass** zum Auffangen der dem gasförmigen Medium entzogenen Flüssigkeit ein Auffangraum vorgesehen ist, in dem die Flüssigkeit gesammelt wird.

10. Windenergieanlage nach einem der vorhergehenden Ansprüche,
**dadurch gekennzeichnet, dass** ein erster Temperatursensor (16) zum Erfassen der Temperatur des ersten Elements (10) und ein zweiter Temperatursensor (18) zum Erfassen der Umgebungstemperatur vorgesehen ist, dass die Temperaturen bevorzugt von einer Steuerungseinrichtung erfasst und verarbeitet werden und die Steuerungseinrichtung die Temperatur des ersten Elements durch Variationen der Kühlleistung der Kühlvorrichtung (12) einstellt.

11. Windenergieanlage nach Anspruch 10,
**dadurch gekennzeichnet, dass** die Steuerungseinrichtung derart gesteuert wird, dass die Temperatur des ersten Elements (10) bei einem vorgebbaren Betrag unterhalb der Raumtemperatur liegt und/oder eine vorgebbare Temperatur nicht übersteigt.

12. Windenergieanlage, bestehend aus einem Turm und einem an der Turmspitze angeordneten Maschinenhaus zur Aufnahme verschiedener Maschinenaggregate der Windenergieanlage,
**dadurch gekennzeichnet, dass** im Turm und/oder Maschinenhaus eine Einrichtung nach einem der vorstehenden Ansprüche angeordnet ist.

13. Windenergieanlage nach Anspruch 12,
**dadurch gekennzeichnet, dass** die Einrichtung etwa im Bereich des Turmfußes der Windenergieanlage angeordnet ist.

14. Windenergieanlage nach einem der vorhergehenden Ansprüche,
**dadurch gekennzeichnet, dass** mehrere Luftentfeuchtungseinrichtungen nach einem der vorstehenden Ansprüche in der Windenergieanlage angeordnet sind.

15. Windenergieanlage nach einer der vorhergehenden Ansprüche,
**dadurch gekennzeichnet, dass** mit jeder Luftentfeuchtungseinrichtung etwa ein bis zehn Liter Wasser bevorzugt zwei bis fünf Liter Wasser, pro Tag der Luft entnommen werden und die gesamte elektrische Leistung der Luftentfeuchtungseinrichtung etwa im Bereich zwischen 50 und 500 W liegt.

## Claims

1. A wind power installation, consisting of a tower and a nacelle disposed at the top of the tower, having a generator, where appropriate a transformer and a power converter coupled to the transformer, wherein, in the vicinity of the generator or the transformer and/or the power converter and/or in the region of a tower base of the wind power installation, a device for dehumidifying the air is provided, wherein the device for dehumidifying has a first planar element (10) and a cooling device (12) coupled therewith for cooling the first element (10) to a temperature below the temperature in the vicinity of the generator or transformer and/or the power converter and/or in the region of the tower base.

2. A wind power installation according to claim 1,
**characterised in that** the device for dehumidifying is **characterised by** a first planar element (10) and a cooling device (12) coupled therewith for cooling the first element (10) to a temperature below room temperature, the device for dehumidifying the air being arranged substantially in the interior of the wind power installation.

3. A wind power installation according to claim 1 or claim 2,
**characterised in that** the second element (14) is connected to a wall (32) or is formed by the wall (32).

4. A wind power installation according to any one of the preceding claims,
**characterised in that** the cooling device (12) is disposed between the first element (10) and the second element (14) and preferably connects them together.

5. A wind power installation according to any one of the preceding claims,
**characterised by** a cooling device utilising the Peltier effect.

6. A wind power installation according to any one of the preceding claims,
**characterised in that** a collecting unit and/or a conduit for discharging the liquid extracted from the gaseous medium is provided.

7. A wind power installation according to claim 6,
**characterised in that** the liquid collected with the first planar element (10) is passed out of the space *via* an appropriate device, preferably the conduit (20).

8. A wind power installation according to claim 7,
**characterised in that** the conduit is disposed in the region of the space near the ground, in the case of a wind energy installation in the region of the base of the tower.

9. A wind power installation according to any one of the preceding claims,
**characterised in that** a collecting space is provided for collecting the liquid extracted from the gaseous medium, in which collecting space the liquid is collected.

10. A wind power installation according to any one of the preceding claims,
**characterised in that** a first temperature sensor (16) is provided for sensing the temperature of the first element (10) and a second temperature sensor (18) is provided for sensing the ambient temperature, the temperatures are preferably acquired and processed by a control device and the control device sets the temperature of the first element by varying the cooling power of the cooling device (12).

11. A wind power installation according to claim 10,
**characterised in that** the control device is controlled in such a manner that the temperature of the first element (10) is below room temperature by a predefinable amount and/or does not exceed a predefinable temperature.

12. A wind power installation, consisting of a tower and a nacelle, arranged at the top of the tower, for accommodating various machinery units of the wind power installation,
**characterised in that** a device according to any one of the preceding claims is disposed in the tower and/or nacelle.

13. A wind power installation according to claim 12,
**characterised in that** the device is disposed approximately in the region of the base of the tower of the wind power installation.

14. A wind power installation according to any one of the preceding claims,
**characterised in that** a plurality of air dehumidifiers according to any one of the preceding claims are disposed in the wind power installation.

15. A wind power installation according to any one of the preceding claims,
**characterised in that** approximately from one to ten litres of water, preferably from 2 to 5 litres of water, are extracted from the air per day by each air dehumidifier, and the total electrical output of the air dehumidifier is approximately in the range from 50 to 500 W.

## Revendications

1. Installation d'énergie éolienne composée d'une tour et d'une salle des machines placée au sommet de la tour avec un générateur, le cas échéant, un transformateur et un convertisseur couplé au transformateur, à proximité du générateur ou du transformateur et/ou du convertisseur et/ou au niveau d'un pied de la tour de l'installation d'énergie éolienne, un dispositif pour la déshumidification de l'air étant prévu, le dispositif pour la déshumidification présentant un premier élément en plan (10) et un dispositif de refroidissement (12) qui lui est couplé pour le refroidissement du premier élément (10) à une température en dessous de la température à proximité du générateur ou du transformateur et/ou du convertisseur et/ou au niveau du pied de la tour.

2. Installation d'énergie éolienne selon la revendication 1,
**caractérisée en ce que** le dispositif de déshumidification est **caractérisé par** un premier élément en plan (10) et un dispositif de refroidissement (12) qui lui est couplé pour le refroidissement du premier élément (10) à une température en dessous de la température ambiante, le dispositif de déshumidification de l'air étant placé principalement à l'intérieur de l'installation d'énergie éolienne.

3. Installation d'énergie éolienne selon la revendication 1 ou 2,
**caractérisée en ce que** le deuxième élément (14) est relié à une paroi (32) ou formé par la paroi (32).

4. Installation d'énergie éolienne selon l'une des revendications précédentes,
**caractérisée en ce que** le dispositif de refroidissement (12) est placé entre le premier élément (10) et le deuxième élément (14) et relie ceux-ci de manière préférée.

5. Installation d'énergie éolienne selon l'une des revendications précédentes,
**caractérisée par** un dispositif de refroidissement utilisant l'effet de Peltier.

6. Installation d'énergie éolienne selon l'une des revendications précédentes,
**caractérisée en ce qu'**une unité de capture et/ou un canal pour évacuer le liquide retiré de l'agent gazeux, est prévu (e) .

7. Installation d'énergie éolienne selon la revendication 6,
**caractérisée en ce que** le liquide capturé avec le premier élément (10) est conduit par un dispositif correspondant, de préférence le canal (20), en-dehors de la pièce.

8. Installation d'énergie éolienne selon la revendication 7,
**caractérisée en ce que** le canal est placé au niveau à proximité du sol de la pièce, au niveau du pied de la tour dans une installation d'énergie éolienne.

9. Installation d'énergie éolienne, selon l'une des revendications précédentes,
**caractérisée en ce que** pour capturer le liquide retiré de l'agent gazeux, un espace de capture est prévu, dans lequel le liquide est collecté.

10. Installation d'énergie éolienne selon l'une des revendications précédentes,
**caractérisée en ce qu'**un premier capteur de température (16) pour la détection de la température du premier élément (10) et un deuxième capteur de température (18) pour la détection de la température environnante, est prévu, que les températures sont de préférence détectées et traitées par un dispositif de commande et le dispositif de commande règle la température du premier élément par des variations de la puissance frigorifique du dispositif de refroidissement (12).

11. Installation d'énergie éolienne selon la revendication 10,
**caractérisée en ce que** le dispositif de refroidissement est commandé de manière à ce que la température du premier élément (10) soit en dessous de la température ambiante avec une valeur qui peut être prédéfinie et/ou ne dépasse pas une température qui peut être prédéfinie.

12. Installation d'énergie éolienne composée d'une tour et d'une salle des machines placée au sommet de la tour pour recevoir différents groupes de machines de l'installation d'énergie éolienne,
**caractérisée en ce que** dans la tour et/ou la salle des machines, un dispositif selon l'une des revendications précédentes est placé.

13. Installation d'énergie éolienne selon la revendication 12,
**caractérisée en ce que** le dispositif est placé environ au niveau du pied de la tour de l'installation d'énergie éolienne.

14. Installation d'énergie éolienne selon l'une des revendications précédentes,
**caractérisée en ce que** plusieurs dispositifs de déshumidification de l'air sont placés dans l'installation d'énergie éolienne selon l'une des revendications précédentes.

15. Installation d'énergie éolienne selon l'une des revendications précédentes,
**caractérisée en ce qu'**avec chaque dispositif de déshumidification de l'air, environ un à dix litres d'eau, de préférence deux à cinq litres d'eau, sont retirés de l'air par jour et la puissance électrique totale du dispositif de déshumidification de l'air est entre 50 et 500 W environ.
